# EUROPEAN PATENT SPECIFICATION

(11) **EP 4 755 597 B1**
(45) Date of publication and mention of the grant of the patent: **30.09.2026**
(21) Application number: 24217204.7
(22) Date of filing: 03.12.2024
(51) Int. Cl.: B25J 19/02

(54) **A ROBOTIC MANIPULATOR WITH CAMERA AND A METHOD OF ADJUSTING A FIELD OF VISION OF THIS CAMERA**
ROBOTERMANIPULATOR MIT KAMERA UND VERFAHREN ZUR EINSTELLUNG EINES SICHTFELDES DIESER KAMERA
MANIPULATEUR ROBOTIQUE AVEC CAMÉRA ET PROCÉDÉ DE RÉGLAGE D'UN CHAMP DE VISION DE CETTE CAMÉRA

(43) Date of publication of application: 10.06.2026
(73) Proprietor: HELLA GmbH & Co. KGaA, 59552 Lippstadt (DE); Hella Autotechnik Nova s.r.o., 78985 Mohelnice (CZ)
(72) Inventor: Gutte, Benedikt, 59510 Lippetal (DE); Kubat, Thomas, 74221 Koprivnice (CZ); Sandera, Petr, 78985 Mohelnice (CZ); Strnad, Jan, 76601 Valasske Klobouky (CZ); Stula, Vaclav, 70300 Ostrava (CZ)
(74) Representative: Behr-Wenning, Gregor

(56) References cited:
- DE-A1- 102012 104 196
- US-A1- 2024 046 401
- US-B2- 10 875 187

## Description

### Technical Field

The present invention relates to autonomous robotic manipulators, e.g., for assembly operations, especially in automotive, where the manipulator carries a camera for guiding its movements.

### Background of the Invention

It is known in the art to provide robotic manipulators with cameras that provide them with computer vision. The robotic manipulator can then be visually guided by a control unit processing data from the camera. Document US10875187B2 describes such a manipulator. A camera is fixed close to an effector and directed towards the effector so that it provides video of operation of the effector and of the object being manipulated by the effector.

A disadvantage of robotic manipulators with cameras known from the state of the art is that as the effector moves during its operation, it often gets between the camera and the object. This prevents the camera from properly seeing what the effector does.

It would thus be advantageous to provide an improved way of attaching camera to a robotic arm which would at least partially alleviate this problem, i.e., which would enable the camera to view the object more reliably.

### Summary of the Invention

The shortcomings of the solutions known in the prior art are to some extent eliminated by a robotic manipulator comprising an arm, a wrist for carrying an effector, and a camera assembly for imaging the effector and/or objects affected by the effector.

The wrist is rotationally connected to the arm around a wrist axis, which is preferably parallel with the length of the arm or of a part of the arm attached to the wrist. The arm can comprise several arm sections. E.g., a lower arm (forearm) and an upper arm, which are connected by an elbow, wherein the upper arm is connected by a shoulder to a frame, a floor etc. The arm can thus provide a required range of movements to the effector, e.g., in six axes.

The camera assembly comprises a camera and a carrier for the camera. The camera can be any imaging device, especially an industrial camera. Industrial cameras are known in the state of the art, and are used e.g., for providing computer vision to various assembly robots.

The carrier is rotationally attached to the arm and the wrist around the wrist axis and the camera is attached to the carrier, such that the camera is rotatable relative to the arm and relative to the wrist via the carrier. The carrier can e.g., by placed between the arm and the wrist and connected to both via a bearing. It can also be placed onto the wrist or onto the arm. Placement on the wrist can be especially advantageous, since it is closer to the effector. The camera is placed on the carrier at a certain distance from the wrist axis and is directed towards an effector when an effector is attached to the wrist.

The camera is a stereoscopic camera, i.e., a camera which can provide 3D vision. The camera assembly further comprises a locking assembly. The locking assembly serves for locking the camera selectively relative to the wrist or relative to the arm. The locking assembly comprises at least a first lock for locking the carrier or a part thereof to the arm to prevent rotation of the camera relative to the arm around the wrist axis, and a second lock for locking the carrier or a part thereof to the wrist to prevent rotation of the camera relative to the wrist around the wrist axis.

The locks can e.g. be mechanical, electronical, pneumatic, hydraulic or a combination thereof. More than two locks can be provided, e.g., to enable the camera to be fixed relative to the arm in multiple positions. The locks can lock the carrier to the wrist or arm directly. They can also lock it indirectly, e.g., the camera can be locked to the wrist or the arm, or the lock can engage the carrier and/or the wrist and/or the arm via a further component. E.g. a bracket can be provided to fix one of the locks or a part thereof to the arm or the wrist, etc.

The locks can be lockable in any position of the carrier relative to the arm/wrist. E.g., the carrier can be precisely locked in any position around the arm/wrist. A mechanical brake can be used as such a lock. The locks can also have discrete lockable positions, and the carrier can then only be locked in these positions. For example, an electromagnet can be provided on the arm/wrist, and a several equidistantly spaced ferromagnetic elements can be provided on the carrier. Each of the elements can be attached by magnetic force, and the number of elements determines the number of possible positions for the carrier.

The wrist can include an attachment for attaching the effector, fixedly or detachably. A detachable effector is preferable. The carrier can e.g. have a form of a bracelet, i.e. it can be ring shaped, or tube shaped, connected via a bearing to the arm/wrist. A camera-holding bracket (or several such brackets) can then protrude radially outwards from the ring, and the bracket(s) can hold the camera.

A control unit for controlling the lock assembly and rotation of the wrist around the wrist axis can be a part of the manipulator. This control unit can then handle the positioning of the camera by locking the carrier as needed and rotating the wrist. This control unit can be a single control unit or multiple mutually communicating control units, e.g., one for moving the wrist and one for controlling the locks.

With the present invention, the stereoscopic camera can be rotated around the wrist axis to adjust its field of vision. E.g., if the wrist rotates to grip or move an object, it could get into a position where it blocks a static camera from seeing the object properly. The rotatable camera can be moved to a different angular position to get the object back into its field of vision. Similarly, the movement of the camera can also be used to see the surroundings of the manipulator. The camera can be able to look around even without moving the wrist in any other way than by rotation around the wrist axis.

Thanks to the use of the locks, there is no need for a dedicated actuator (motor) for rotating the camera. The wrist has its own actuator, e.g., a pneumatic, electric, or hydraulic one, as do any other joints of the manipulator. By locking the camera to the wrist, movement of the wrist adjusts the camera relative to the arm. The camera can then be locked to the arm where it stays static during movements of the manipulator and where it is independent from movements of the wrist. This lowers costs of the camera assembly, when compared to situation where it would need its own motor. It also makes the assembly lighter, which is important since many robotic manipulators have a limited carrying capacity, e.g. to around 10 kg.

The manipulator thus preferably comprises no actuator (motor, pneumatic or hydraulic distribution lines etc.) for solely moving the camera. The actuator of the wrist is used for rotating the camera thanks to the locks.

Since a stereoscopic camera is used, a 3D vision is provided without the need to move the camera. The 3D vision is thus provided fairly quickly. The camera can be communicatively connected to a computing unit for processing the data. Computer vision algorithms for processing such image data are known in the art. The processing unit can then control the movement of the manipulator (of the joints and of the effector(s)), and optionally also the locks. The locks can also be controlled by a separate control unit, such as a PC, PLC etc.

The vision provided by the camera can be used to navigate the manipulator in its surroundings, e.g. to move it between a pallet with components and an assembly line where the components are connected to assembled products. It can alternatively or additionally be used to control the effector of the manipulator - to precisely grip an object, move and orient it as needed, place it where it is required etc. For example, the manipulator can be used for taking cables from a cable holder, and then connecting two components of an assembled headlamp by the cables. The provided 3D vision can then be used to navigate the effector to the cable holder, to grab both connectors at the ends of a given cable, to move the cable to another place where the lamps are located and to connect each connector precisely into a corresponding connector of the lamp. Since the effector can e.g., need to be rotated for attaching the connectors to their place, and a field of vision of the camera could then be blocked by the rotated effector, the rotatable camera assembly can be advantageously utilised in such a situation.

The manipulator can further comprise an effector attached to the wrist and rotatable relative to the arm around the wrist axis. Preferably, the effector has at least two gripper units for gripping objects, the gripper units being arranged around the wrist axis. This arrangement of multiple gripper units allows for multiple objects to be carried at once. The manipulator thus can work more efficiently. More than two gripper units, e.g., four gripper units, can be provided on an effector. The gripper units are then preferably equidistantly placed on the effector, so the wrist needs to rotate always by the same angle when interchanging positions of the gripper units.

The locking assembly is then preferably configured for locking the carrier or a part thereof to the wrist in at least two predefined positions, where each of these positions corresponds to one of the gripper units for imaging this corresponding gripper unit and/or object gripped by the gripper unit by the camera when the carrier is in this position. In other words, the locking assembly has predefined position for the camera, where each gripper unit has a corresponding position, such that the camera can have its field of vision easily set to each gripper unit, without rotating the wrist.

Preferably, the carrier is detachable from the arm and/or the wrist; and/or the camera is detachable from the carrier. In other words, the camera can be taken off the manipulator, either by itself, or together with the carrier or a part thereof. This allows for easier maintenance or replacement and allows the camera to be used elsewhere when it is not needed on the manipulator.

Preferably, the carrier is adjustable for adjusting inclination of the camera relative to the wrist axis and/or distance of the camera from the wrist axis. The inclination can be adjusted by providing a hinge or rotatable joint between the part of the carrier connected to the camera and the part connected to the arm/wrist. A motor or other actuator can be provided to change the inclination, or the inclination can be adjustable manually. The carrier can then include a further lock for locking the camera in its inclination.

The distance from the wrist axis can similarly be adjusted, e.g., by a telescopic mechanism, by a linear actuator, by placing the camera on a linear guiding element (e.g. a rail) etc. The distance can also be adjusted by a motor/actuator, or manually, and the distance adjustment mechanism can have a further lock.

The first lock and/or the second lock can comprise two lockable parts, wherein one of the parts is attached to the carrier and the other part is attached to arm or the wrist. The locking between the two parts then locks the carrier. Each lock can then have these two parts. For the wrist lock, one part is on the carrier, the other on the wrist. For the arm lock, one part is on the carrier, the other on the arm. One part can be a ring, a disc or a peripheral flange etc., such that the other part can lock onto it in any position.

One of the parts can be an electromagnet and the other part can then be magnetic or ferromagnetic. This allows the two parts to engage and lock each other, and thus the carrier, by a magnetic force. The other part can be a second electromagnet, but using a piece of ferromagnetic material can be cheaper and adds less weight to the arm.

Analogously, one of the parts can be a movable latch and the other part can comprise an opening or protrusion for latching of the latch. The latch can e.g., be a pneumatically or hydraulically movable cylinder, which locks into an opening in the other part.

The stereoscopic camera can comprise two camera units located at different positions around the wrist axis.

The shortcomings of the solutions known in the prior art are to some extent also eliminated by a method of adjusting a field of vision of a camera carried by a robotic manipulator according to the invention. The method comprises the steps of:
- Locking a camera carrier or a part thereof to a wrist of the robotic manipulator;
- Rotating the wrist together with the carrier or a part thereof and with the camera which is attached to the carrier (in this step, the angular position of the camera with respect to the arm is thus changed);
- Unlocking the carrier or the part thereof from the wrist and locking it to an arm of the manipulator.

The camera is thus rotatably attached to the manipulator, preferably between the wrist and the arm, to the wrist, or close to the space between the arm and wrist. By locking the camera and carrier to the wrist, rotation of the wrist can be used to adjust the angular position of the camera around the wrist axis.

The method can then further comprise a step of moving the wrist independently of the carrier while the carrier or part thereof is locked to the arm. The wrist can thus be used to move an effector as needed, and the position of the camera is dependent on the wrist only when required, especially to change the position of the camera and then lock it to the arm.

### Description of Drawings

A summary of the invention is further described by means of exemplary embodiments thereof, which are described with reference to the accompanying drawings, in which:
- Fig 1.: Shows a perspective view of a part of a robotic manipulator according to a first embodiment of the invention, where a free end of an arm, a wrist attached to the arm and a camera assembly rotatably attached between them can be seen.
- Fig 2.: Shows a side view of the whole manipulator according to the first embodiment.
- Fig 3.: Schematically shows the camera assembly of the manipulator with its camera rotated towards one gripper unit of an effector holding an object.
- Fig 4.: Schematically shows the camera assembly from fig. 3 rotated towards another gripper unit of the effector as it is about to grab an object.
- Fig 5.: Schematically shows sectional detailed view of a locking assembly of the camera assembly from a second embodiment, where the locking assembly has two locks, each comprising a pneumatically movable latch which can be engaged with one of a number of openings for the latch in order to lock the rotatable camera assembly to the wrist or to the arm, wherein the camera assembly is locked to the arm in this figure.
- Fig 6.: Schematically shows the view from fig. 5 when the camera assembly is locked to the wrist.
- Fig 7.: Schematically shows a third embodiment, where the camera assembly allows for adjusting inclination of camera and its distance from the arm.

### Exemplary Embodiments of the Invention

The invention will be further described by means of exemplary embodiments with reference to the respective drawings.

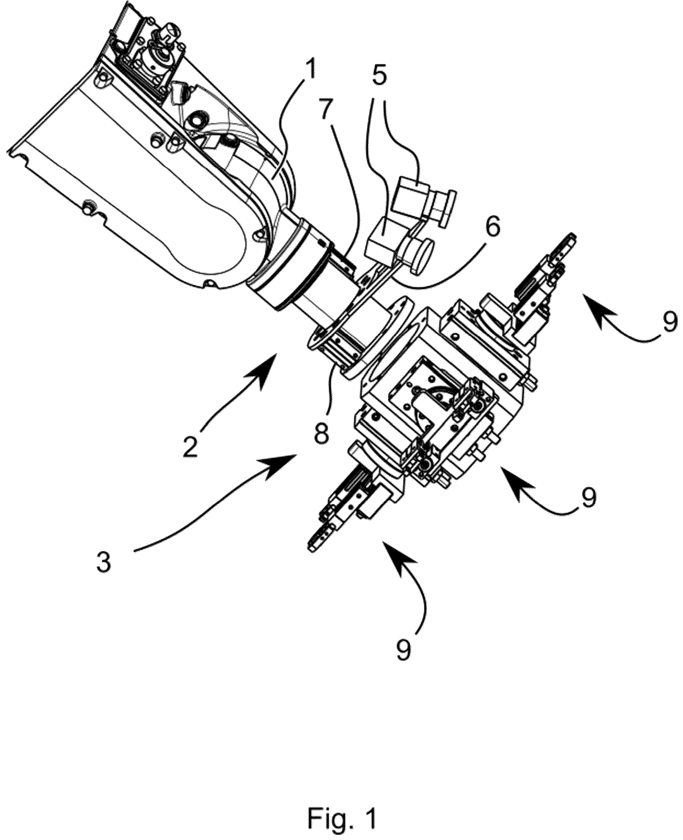

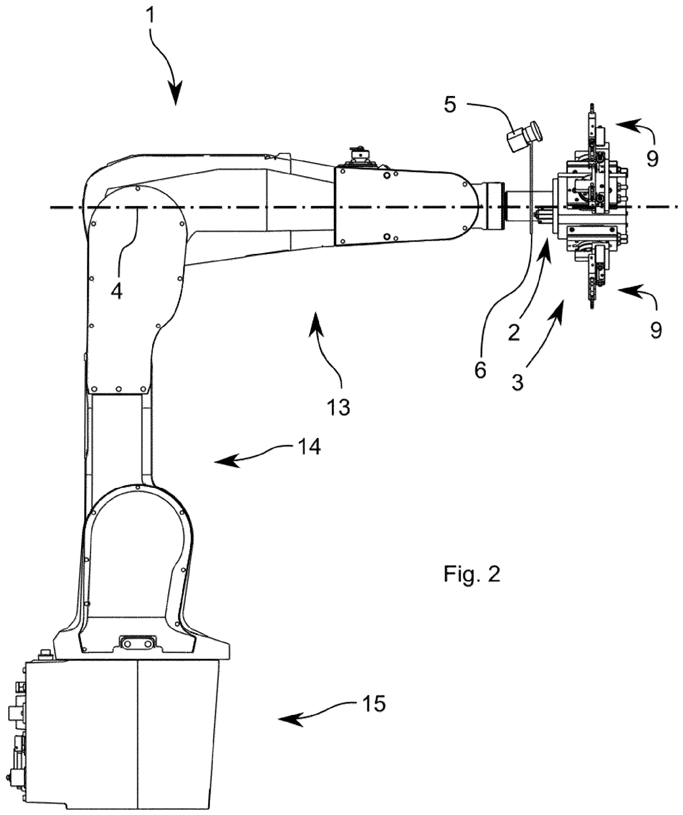

A first embodiment of the invention is shown in figs. 1 to 4. This embodiment is a robotic manipulator for assembly operations in automotive lighting industry. The manipulator comprises a robotic arm 1 which includes a lower arm 13 and an upper arm 14 connected by an elbow joint. The upper arm 14 is rotationally connected to a base 15 of the manipulator, the upper arm 14 is connected to a wrist 2. The wrist 2 is detachable from the arm 1 and is rotational with respect to the arm 1 around a wrist axis 4, which is also a central axis of the lower arm 13. The wrist 2 carries a detachable effector 3.

The manipulator further comprises a camera assembly - a stereoscopic camera 5 with two camera units for providing a 3D vision to the manipulator, and a carrier 6 for the camera 5. The carrier 6 is located between the wrist 2 and the arm 1 and is rotatable freely around the wrist axis 4. A lock assembly in included in the camera assembly, and this lock assembly can selectively lock the carrier 6 to the wrist 2 or to the arm 1 so it can rotate with the wrist 2 or be statical (relative to the lower arm 13) with the arm 1.

The manipulator also includes a control unit (not shown) which processes data from the camera 5 and guides the manipulator as programmed to do the required assembly steps. The control unit is a PC in this embodiment, connected by a cable to the camera 5 and to actuators of the manipulator movements and of the lock assembly.

The base 15, the upper arm 14, the lower arm 13, and the wrist 2, in this embodiment, are standard robotic manipulator components known in the art. Electric servo motors are used as actuators for providing movements of the arm 1 and the wrist 2.

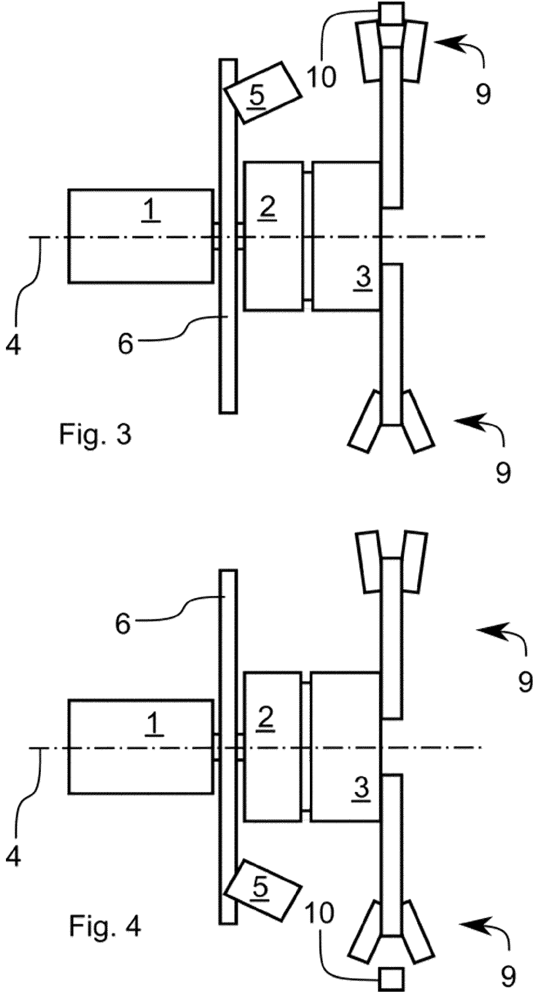

The carrier 6 for the camera 5 is a plate made of plastic. It comprises a ring part and two camera brackets. The wrist 2 is connected to the arm 1 via a wrist joint defining the rotational movement of the wrist 2, and the ring part of the carrier 6 is placed onto a cylindrical part of the wrist 2, behind an attachment for the effector 3 (see fig. 1). In the schematical figs. 3 and 4, the ring part is shown between the arm 1 and the wrist 2, onto a cylindrical part of the wrist joint - this is for the sake of simplicity of these figures, but in an alternative embodiment, the carrier 6 can actually be placed onto a cylindrical part of the wrist joint, between the arm 1 and the wrist 2.

The ring part in the first embodiment is connected to the wrist 2 via a bearing which enables rotation of the carrier 6. The carrier 6 is thusly rotationally connected the wrist 2 and indirectly also to the arm 1. Each of the bracket includes an attachment for attaching one camera units of the stereoscopic camera 5. The carrier 6 in this embodiment is not adjustable but can be changed for a differently shaped but otherwise analogously constructed carrier 6 if a different camera position is needed.

The camera units are attached to the bracket with bolts, and thus can also be detached from the carrier 6. The ring part of the carrier 6 further includes two ferromagnetic discs, one on each side. These discs form a part of the locking assembly which will be described in more detail below.

The locking assembly comprises two electromagnetic locks. Each lock comprises an electromagnet. For the first lock 7, the electromagnet is placed on the lower arm 13 such that it is facing the ring part of the carrier 6. When the electromagnet is switched on by the control unit, it attracts the closer ferromagnetic disc on the carrier 6 and thus keeps the carrier 6 locked onto the arm 1. The camera 5 then cannot be rotated relative to the arm 1. For the second lock 8, the electromagnet is placed on the wrist 2 such that it is facing the ring part of the carrier 6. When the electromagnet is switched on by the control unit, it attracts the closer ferromagnetic disc on the carrier 6 and thus keeps the carrier 6 locked onto the wrist 2. The camera 5 then cannot be rotated relative to the wrist 2. Only one of the electromagnets is on at any given time so that they do not prevent rotation of the wrist 2.

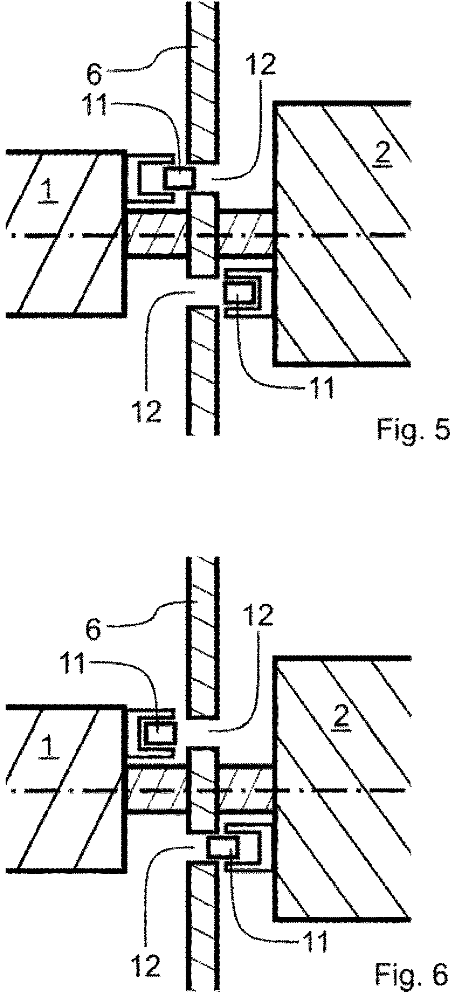

As a result of this lock assembly configuration, when the carrier 6 is locked to the wrist 2, it rotates when the wrist 2 rotates. The angular position of the camera 5 around the wrist axis 4 can thus be adjusted by rotating the wrist 2. When the carried is locked to the arm 1, the wrist 2 can rotate without affecting the carrier 6. The rotation of the wrist 2 together with selectively locking the carrier 6 to the arm 1 or the wrist 2 thus enables rotating of the carrier 6 as needed without the need for a dedicated motor for the carrier 6. At the same time, the wrist can rotate independently of the carrier 6, and the camera 5 can thus watch the effector 3 on the wrist 2 during its operation. Figs. 3 and 4 omit the lock for simplicity, but the operation of the locks and the selective locking to the wrist 2 or the arm 1 is shown in figs. 5 and 6 for the second embodiment, and in the first embodiment the operation is similar, only contactless.

The effector 3 in this embodiment is detachably fixed to the wrist 2 and comprises for gripper units 9 uniformly distributed around the wrist axis 4. Each gripper unit 9 faces in the radial direction and comprises two sets of independently controllable jaws. Each gripper unit 9 can thus hold two objects 10, such as connectors of a cable. The rotation of the wrist 2 thus rotates the gripper units 9, and the effector 3 can carry up to four objects 10, or up to eight objects 10 if each jaw carries a different object 10. The rotation of the wrist 2 can set the gripper units 9 such that they are in their turns facing a storage of objects 10 to be mounted, or the products they are mounting the objects 10 to. Thanks to the rotatability of the carrier 6, the field of vision of the stereoscopic camera 5 can be adjusted so that the gripping is always captured, and the manipulator can thus be controlled during the gripping (see figs. 3 and 4).

A second embodiment of the invention is shown in figs. 4 and 5. This embodiment differs from the first one only in that the lock assembly is a mechanical, pneumatically controlled assembly. The ring part of the carrier 6 has a number of openings 12 - through holes, arranged around the wrist axis 4, where the number of openings 12 defines the number of possible positions for locking. Both the wrist 2 and the arm 1 include their corresponding lock, which has a pneumatically movable piston forming a latch 11 of the lock. The piston can be inserted into one of the openings 12 of the carrier 6 and a rotation between the arm 1 / wrist 2 and the carrier 6 is thus prevented.

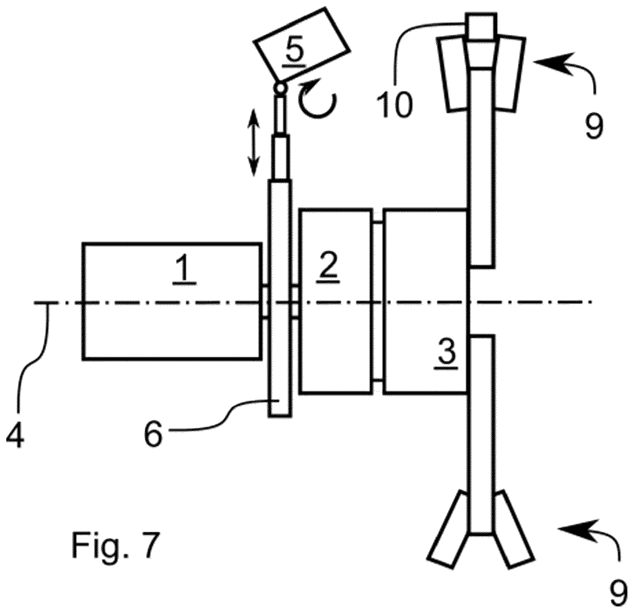

A third embodiment is shown in fig. 7. This embodiment differs from the first one in that the carrier 6 bracket is telescopic, which allows for adjustment of the distance between the camera 5 and the wrist axis 4. An actuator, e.g., a pneumatical piston inside of the telescopic bracket, is used for adjusting the distance as needed.

The bracket ends with a rotational joint, which is connected to the camera 5. The angle between the camera 5 and the wrist axis 4 can thus be adjusted as well. A further actuator, e.g., a stepper motor, is provided for this movement.

A fourth embodiment of the invention is a method for adjusting a field of vision of a camera 5 carried by a robotic manipulator, in this embodiment by the manipulator from the first embodiment.

The method comprises the main steps of:
- Unlocking the carrier 6 from the arm 1 of the robotic manipulator;
- Locking the carrier 6 to the wrist 2 of the manipulator by the second lock8;
- Rotating the wrist 2 together with the carrier 6 and the camera 5 attached to the carrier 6; and
- Unlocking the carrier 6 from the wrist 2 and locking it to an arm 1 of the manipulator by the first lock 7.

The method thus starts with the camera 5 locked to the arm 1, and ends with the camera 5 locked to the arm 1, in a different angular position. The wrist 2 can then rotate as needed during operation of the effector 3, and the camera 5 stays fixed to the arm 1.

In a more specific exemplary situation during an assembly operation, the method can be carried out in a following way: The assembly operation includes taking cables from a box and plugging each end of the cable into its desired position on a manufactured headlight to electrically connect two components of the headlight. Four cables can be gripped at once, where the wrist 2 is rotated 90° between gripping of the cables. Each jaw of each gripping unit takes hold of a connector on one end of given cable. The stereoscopic camera 5 is imaging the whole gripping process, and the control unit guides the jaws to the cables based on the image data.

When all four cables are taken out of the box, the arm 1 moves to another section of the assembly workspace, where the headlights are provided on a conveyor. The arm 1 needs to be rotated to get the effector 3 into a position where it can plug the cables into the headlight, and this rotation would cause the camera 5 to lose sight of the cables and of the components of the headlight, so a correct plugging of the cables could not be ensured or verified. To provide a better line of sight, there is a camera-rotation step included after the four cables are gripped, while the arm 1 moves to the conveyor with the headlights.

The camera 5 rotation includes the four above given steps - the carrier 6 is unlocked from the arm 1, locked to the wrist 2, the wrist 2 rotates the carrier 6 into a better position for watching the plugging of the cables and then the carrier 6 is unlocked from the wrist 2 and locked to the arm 1 again. The plugging of the cables than takes place on four different headlights and the desired assembly operation is completed.

The carrier 6 is then rotated back into a correct position for watching gripping of the next four cables.

### Alternative embodiments

In an alternative embodiment, the electromagnet, piston or differently formed analogous part of the lock, can be carried by the carrier 6, instead of the arm 1 and/or wrist 2.

The piston of the lock from the second embodiment can be alternatively moved electronically, hydraulically etc.

In an alternative embodiment, the carrier 6 is not a flat disc but is in a form of a bracelet attached around the arm 1 or the wrist 2, instead of being placed between them.

Any type of effector 3, e.g., with a suction gripper, with a welding or cutting tool, etc. can be used on the manipulator.

### Reference List

- 1.: Arm
- 2.: Wrist
- 3.: Effector
- 4.: Wrist axis
- 5.: Camera
- 6.: Carrier
- 7.: First lock
- 8.: Second lock
- 9.: Gripper unit
- 10.: Object
- 11.: Latch
- 12.: Opening for the latch
- 13.: Lower arm
- 14.: Upper arm
- 15.: Base

## Claims

1. A robotic manipulator comprising an arm (1), a wrist (2) for carrying an effector (3), and a camera assembly for imaging the effector (3) and/or objects (10) affected by the effector (3), wherein
• the wrist (2) is rotationally connected to the arm (1) around a wrist axis (4), and
• the camera assembly comprises a camera (5) and a carrier (6) for the camera (5),
**characterized in that**
• the carrier (6) is rotationally attached to the arm (1) and to the wrist (2) around the wrist axis (4) and the camera (5) is attached to the carrier (6), such that the camera (5) is rotatable relative to the arm (1) and relative to the wrist (2) via the carrier (6),
• the camera (5) is a stereoscopic camera, and
• the camera assembly further comprises a locking assembly comprising at least a first lock (7) for locking the carrier (6) or a part thereof to the arm (1) to prevent rotation of the camera (5) relative to the arm (1) around the wrist axis (4), and a second lock (8) for locking the carrier (6) or a part thereof to the wrist (2) to prevent rotation of the camera (5) relative to the wrist (2) around the wrist axis (4).

2. The robotic manipulator according to claim 1 **wherein** the manipulator further comprises an effector (3) attached to the wrist (2) and rotatable relative to the arm (1) around the wrist axis (4), wherein the effector (3) has at least two gripper units (9) for gripping objects (10), the gripper units (9) being arranged around the wrist axis (4).

3. The robotic manipulator according to claim 2 **wherein** the locking assembly is configured for locking the carrier (6) or a part thereof to the wrist (2) in at least two predefined positions, where each of these positions corresponds to one of the gripper units (9) for imaging this corresponding gripper unit and/or object (10) gripped by the gripper unit by the camera (5) when the carrier (6) is in this position.

4. The robotic manipulator according to any preceding claim **wherein** the carrier (6) is detachable from the arm (1) and/or the wrist (2); and/or the camera (5) is detachable from the carrier (6).

5. The robotic manipulator according to any preceding claim **wherein** the carrier (6) is adjustable for adjusting inclination of the camera (5) relative to the wrist axis (4) and/or distance of the camera (5) from the wrist axis (4).

6. The robotic manipulator according to any preceding claim **wherein** the first lock (7) and/or the second lock (8) comprises two lockable parts, wherein one of the parts is attached to the carrier (6) and the other part is attached to arm (1) or the wrist (2).

7. The robotic manipulator according to claim 6 **wherein** one of the parts is an electromagnet and the other part is magnetic or ferromagnetic.

8. The robotic manipulator according to claim 6 **wherein** one of the parts is a movable latch (11) and the other part comprises an opening (12) or protrusion for latching of the latch (11).

9. The robotic manipulator according to any preceding claim **wherein** the stereoscopic camera (5) comprises two camera units located at different positions around the wrist axis (4).

10. A method of adjusting a field of vision of a camera (5) carried by a robotic manipulator according to any preceding claim, the method **characterized in that** it comprises the steps of:
• Locking a camera carrier (6) or a part thereof to a wrist (2) of the robotic manipulator;
• Rotating the wrist (2) together with the carrier (6) or a part thereof and with the camera (5) which is attached to the carrier (6);
• Unlocking the carrier (6) or the part thereof from the wrist (2) and locking it to an arm (1) of the manipulator.

11. The method according to claim 10 **wherein** it further comprises a step of moving the wrist (2) independently of the carrier (6) while the carrier (6) or part thereof is locked to the arm (1).

## Patentansprüche

1. Robotermanipulator, umfassend einen Arm (1), ein Handgelenk (2) zum Tragen eines Effektors (3) und eine Kameraanordnung zum Abbilden des Effektors (3) und/oder von Objekten (10), auf die durch den Effektor (3) eingewirkt wird, wobei
• das Handgelenk (2) um eine Handgelenkachse (4) drehbar mit dem Arm (1) verbunden ist, und
• die Kameraanordnung eine Kamera (5) und einen Träger (6) für die Kamera (5) umfasst,
**dadurch gekennzeichnet, dass**
• der Träger (6) drehbar an dem Arm (1) und an dem Handgelenk (2) um die Handgelenkachse (4) angebracht ist und die Kamera (5) an dem Träger (6) angebracht ist, sodass die Kamera (5) über den Träger (6) relativ zu dem Arm (1) und relativ zu dem Handgelenk (2) drehbar ist,
• die Kamera (5) eine stereoskopische Kamera ist, und
• die Kameraanordnung ferner eine Verriegelungsanordnung umfasst, umfassend wenigstens eine erste Verriegelung (7) zum Verriegeln des Trägers (6) oder eines Teils davon an dem Arm (1), um eine Drehung der Kamera (5) relativ zum Arm (1) um die Handgelenkachse (4) zu verhindern, und eine zweite Verriegelung (8) zum Verriegeln des Trägers (6) oder eines Teils davon an dem Handgelenk (2), um eine Drehung der Kamera (5) relativ zum Handgelenk (2) um die Handgelenkachse (4) zu verhindern.

2. Robotermanipulator nach Anspruch 1, **wobei** der Manipulator ferner einen Effektor (3) umfasst, der am Handgelenk (2) angebracht und relativ zum Arm (1) um die Handgelenkachse (4) drehbar ist, wobei der Effektor (3) wenigstens zwei Greifereinheiten (9) zum Greifen von Objekten (10) aufweist, wobei die Greifereinheiten (9) um die Handgelenkachse (4) angeordnet sind.

3. Robotermanipulator nach Anspruch 2, **wobei** die Verriegelungsanordnung zum Verriegeln des Trägers (6) oder eines Teils davon in wenigstens zwei vordefinierten Positionen am Handgelenk (2) konfiguriert ist, wobei jede dieser Positionen einer der Greifereinheiten (9) zum Abbilden dieser entsprechenden Greifereinheit und/oder des von der Greifereinheit gegriffenen Objekts (10) durch die Kamera (5), wenn sich der Träger (6) in dieser Position befindet, entspricht.

4. Robotermanipulator nach einem der vorhergehenden Ansprüche, **wobei** der Träger (6) von dem Arm (1) und/oder dem Handgelenk (2) lösbar ist; und/oder die Kamera (5) von dem Träger (6) lösbar ist.

5. Robotermanipulator nach einem der vorhergehenden Ansprüche, **wobei** der Träger (6) zum Einstellen der Neigung der Kamera (5) relativ zur Handgelenkachse (4) und/oder des Abstands der Kamera (5) von der Handgelenkachse (4) einstellbar ist.

6. Robotermanipulator nach einem der vorhergehenden Ansprüche, **wobei** die erste Verriegelung (7) und/oder die zweite Verriegelung (8) zwei verriegelbare Teile umfassen, wobei eines der Teile am Träger (6) angebracht ist und das andere Teil am Arm (1) oder am Handgelenk (2) angebracht ist.

7. Robotermanipulator nach Anspruch 6, **wobei** eines der Teile ein Elektromagnet ist und das andere Teil magnetisch oder ferromagnetisch ist.

8. Robotermanipulator nach Anspruch 6, **wobei** eines der Teile eine bewegbare Raste (11) ist und das andere Teil eine Öffnung (12) oder einen Vorsprung zum Verriegeln der Raste (11) umfasst.

9. Robotermanipulator nach einem der vorhergehenden Ansprüche, **wobei** die stereoskopische Kamera (5) zwei an unterschiedlichen Positionen um die Handgelenkachse (4) befindliche Kameraeinheiten umfasst.

10. Verfahren zum Einstellen eines Sichtfeldes einer Kamera (5), getragen von einem Robotermanipulator nach einem der vorhergehenden Ansprüche, wobei das Verfahren **dadurch gekennzeichnet ist, dass** es folgende Schritte umfasst:
• Verriegeln eines Kameraträgers (6) oder eines Teils davon an einem Handgelenk (2) des Robotermanipulators;
• Drehen des Handgelenks (2) zusammen mit dem Träger (6) oder einem Teil davon und mit der Kamera (5), die an dem Träger (6) angebracht ist;
• Entriegeln des Trägers (6) oder des Teils davon von dem Handgelenk (2) und Verriegeln an einem Arm (1) des Manipulators.

11. Verfahren nach Anspruch 10, **wobei** es ferner einen Schritt des Bewegens des Handgelenks (2) unabhängig vom Träger (6) umfasst, während der Träger (6) oder ein Teil davon an dem Arm (1) verriegelt ist.

## Revendications

1. Manipulateur robotique comprenant un bras (1), une articulation (2) destinée à recevoir un effecteur (3) et un ensemble caméra pour filmer l'effecteur (3) et/ou des objets (10) sur lesquels agit l'effecteur (3),
• l'articulation (2) étant reliée au bras (1) de manière à pouvoir tourner autour d'un axe d'articulation (4) et
• l'ensemble caméra comprenant une caméra (5) et un support (6) pour la caméra (5),
**caractérisé en ce que**
• le support (6) est fixé au bras (1) et à l'articulation (2) de manière à pouvoir tourner autour de l'axe d'articulation (4) et **en ce que** la caméra (5) est fixée au support (6) de manière à ce que la caméra (5) puisse être tournée par rapport au bras (1) et par rapport à l'articulation (2) via le support (6),
• la caméra (5) est une caméra stéréoscopique et
• l'ensemble caméra comprend en outre un dispositif de verrouillage comprenant au moins un premier verrou (7) pour verrouiller le support (6) ou une partie de celui-ci sur le bras (1) afin d'empêcher la rotation de la caméra (5) par rapport au bras (1) autour de l'axe d'articulation (4) et un deuxième dispositif de verrouillage (8) destiné à verrouiller le support (6) ou une partie de celui-ci sur l'articulation (2) afin d'empêcher la rotation de la caméra (5) par rapport à l'articulation (2) autour de l'axe d'articulation (4).

2. Manipulateur robotique selon la revendication 1 **caractérisé en ce que** le manipulateur comprend en outre un effecteur (3) fixé à l'articulation (2) et pouvant tourner par rapport au bras (1) autour de l'axe d'articulation (4), l'effecteur (3) comportant au moins deux unités de préhension (9) destinées à saisir des objets (10), les unités de préhension (9) étant disposées autour de l'axe d'articulation (4).

3. Manipulateur robotique selon la revendication 2 **caractérisé en ce que** l'ensemble de verrouillage est configuré pour verrouiller le support (6) ou une partie de celui-ci sur l'articulation (2) dans au moins deux positions prédéfinies, chacune de ces positions correspondant à l'une des unités de préhension (9) afin de permettre à la caméra de filmer cette unité de préhension correspondante et/ou l'objet (10) saisi par l'unité de préhension de la caméra (5) lorsque le support (6) se trouve dans cette position.

4. Manipulateur robotique selon l'une des revendications précédentes **caractérisé en ce que** le support (6) peut être retiré du bras (1) et/ou de l'articulation (2) et/ou **en ce que** la caméra (5) peut être retirée du support (6).

5. Manipulateur robotique selon l'une des revendications précédentes **caractérisé en ce que** le support (6) est réglable pour ajuster l'inclinaison de la caméra (5) par rapport à l'axe de l'articulation (4) et/ou la distance entre la caméra (5) et l'axe de l'articulation (4).

6. Manipulateur robotique selon l'une des revendications précédentes **caractérisé en ce que** le premier dispositif de verrouillage (7) et/ou le deuxième dispositif de verrouillage (8) comprend deux pièces verrouillables, l'une des pièces étant fixée au support (6) et l'autre pièce étant fixée au bras (1) ou à l'articulation (2).

7. Manipulateur robotique selon la revendication 6 **caractérisé en ce que** l'une des pièces est un électroaimant et l'autre pièce est magnétique ou ferromagnétique.

8. Manipulateur robotique selon la revendication 6 **caractérisé en ce que** l'une des pièces est un loquet mobile (11) et l'autre pièce comprend une ouverture (12) ou une saillie destinée à l'enclenchement du loquet (11).

9. Manipulateur robotique selon l'une des revendications précédentes **caractérisé en ce que** la caméra stéréoscopique (5) comprend deux unités de caméra situées à des positions différentes autour de l'axe de l'articulation (4).

10. Procédé de réglage d'un champ de vision d'une caméra (5) portée par un manipulateur robotique selon l'une des revendications précédentes, le procédé étant **caractérisé en ce qu'**il comprend les étapes suivantes :
• Verrouiller un support de caméra (6) ou une partie de celui-ci sur une articulation (2) du manipulateur robotique ;
• Faire tourner l'articulation (2) avec le support (6) ou une partie de celui-ci et avec la caméra (5) fixée au support (6) ;
• Déverrouiller le support (6) ou la partie de celui-ci de l'articulation (2) et le verrouiller sur un bras (1) du manipulateur.

11. Procédé selon la revendication 10 **caractérisé en ce qu'**il comprend en outre une étape consistant à déplacer l'articulation (2) indépendamment du support (6) tandis que le support (6) ou une partie de celui-ci est verrouillé sur le bras (1).
